# EUROPEAN PATENT APPLICATION

(11) **EP 0 773 680 A1**
(43) Date of publication of application: **14.05.1997**
(21) Application number: 96914418.7
(22) Date of filing: 24.05.1996
(51) Int. Cl.: H04N 5/91

(54) **IMAGE RECORDING AND REPRODUCING DEVICE**

(30) Priority: 24.05.1995 JP 124631/95
(71) Applicant: MITSUI & CO., LTD., Chiyoda-ku Tokyo 100 (JP)
(72) Inventor: MIYASAKA, Koji No. 404, 12-6, Miyazaki 2-chome, Kanagawa-ken 216 (JP); KOBAYASHI, Daiji, Tokyo 207 (JP)
(74) Representative: Hirsch, Peter
(86) International application number: JP9601377
(87) International publication number: WO9637998

(57) **Abstract**

An image recording and reproducing device (1) for monitor is composed of a plurality of CCTVs (2), a recording/reproducing controller (3) which receives image signals from the CCTVs (2), and a video monitor which reproduces and displays recorded images. The controller (3) is provided with a large-capacity recording circuit (34) incorporating a phase change optical disk as a recording medium. On the recording medium, image information is recorded and stored together with the names of the stations which sent the images and the times when the images are sent from the stations. When the name of a station and the time are designated, a required image is easily reproduced and displayed.

## Description

### Technical Field

This invention relates to an image recording and reproducing device. More particularly, this invention relates to an image recording and reproducing device for monitor, which can record and store in real time the images photographed by a plurality of monitor cameras, and can easily reproduce and display the images and/or sounds recorded at a required time and place.

### Background of the Invention

A crime prevention system and others are installed in office buildings, financial institutions, public agencies and so on, and generally monitor cameras are provided in places important to prevent crimes, and a guard watches the images photographed by the cameras in a monitor room, for example. Generally, the images photographed are recorded and can be reproduced, when necessary. Also, in a manufacturing plant of each industry, an operator usually monitors in a monitor room and so on.

The images photographed by a monitor camera are recorded on a video tape and so on. However, in order to drive a number of monitor cameras in the 24-hour system and to record and store the images received from those cameras, a number of video tapes are always necessary, and wide space to store those video tapes are also necessary. Further, the video tapes which contain the images photographed at the time and place which need to be reproduced cannot be selected, reproduced, or displayed efficiently by human power. A microcomputer can be used to record and store the images automatically photographed. In order to construct such a system, it is necessary to incorporate a high-speed and large-capacity memory means appropriate for that purpose. It is also necessary to be able to record and reproduce in real time and efficiently the images photographed by a plurality of monitor cameras.

### Disclosure of the Invention

Taking the above-mentioned problems into consideration, an object of this invention is to realize an image recording and reproducing device for monitor which can efficiently record and reproduce the images photographed by a plurality of monitor cameras. An object of this invention also lies in realizing an image recording and reproducing device which can be used not only in a monitoring system but also in a variety of uses, such as a recording and reproducing device which can be used for demonstration in a manufacturing process.

In order to solve the above-mentioned problems, the image recording and reproducing device for monitor according to this invention has a plurality of monitor cameras, a multiplexer which controls switching input of the image signals photographed by the monitor cameras, a video signal compressing means which digitizes and compresses the image signals input through the multiplexer, a high-speed and large-capacity memory means which has an optical disk in the phase change recording system and so on to record the compressed digital signals treated by the video signal compressing means, a signal expanding means which reproduces the image signals by expanding the compressed digital signals recorded in the large-capacity memory means, a display means which reproduces and displays the image signals obtained by the signal expanding means, and a control means which comprises a microcomputer to control each of the above-mentioned means, whereby the image recording and reproducing device for monitor, under the control of the control means, receives in real time the images photographed by the plurality of monitor cameras by time-divisionally driving the multiplexer, records and stores in the large-capacity memory means each of the image signals together with information about the time when the images were photographed and information about the camera with which the images were photographed, and can reproduce and display on the display means the required image information by designating the time and the cameras.

The recording and reproducing device may receive sound information as well as image information, and may record sounds at the same time. Or the recording and reproducing device may receive only sounds.

Because the device according to this invention uses as a recording medium an optical disk in a phase change recording system and so on which can record at high speed and in large quantities, and compresses and records the video signals obtained, a large quantity of image information photographed by a number of monitor cameras can be recorded and stored efficiently. The images sent from a number of monitor cameras are time-divisionally driven by a multiplexer, It is possible to receive and store images from a number of monitor cameras in real time. When the time when the images were photographed and the monitor cameras with which the images were photographed are designated, the required image information can be easily reproduced and displayed.

### Brief Description of the Drawing

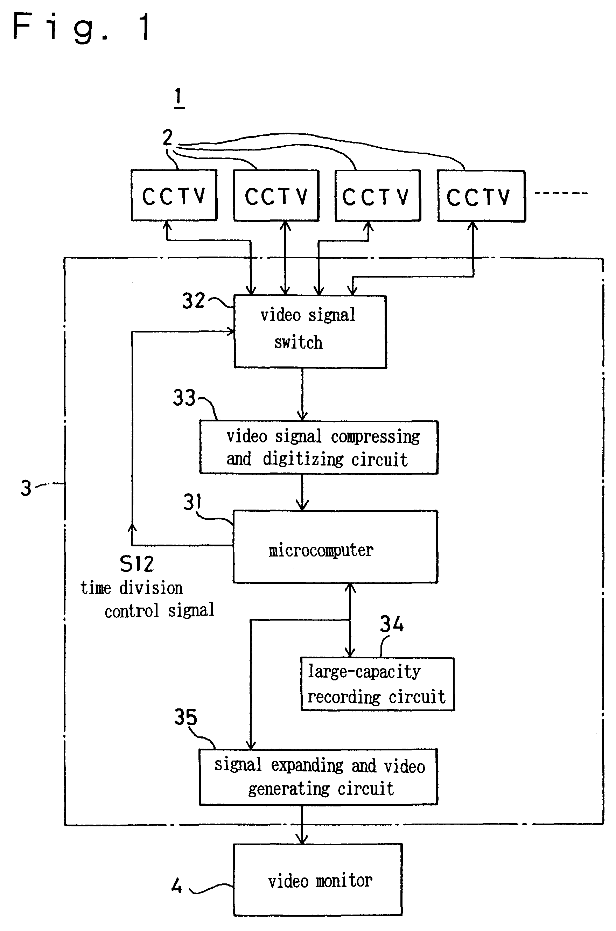

Figure 1 is a schematic block diagram of the whole structure of a device of an example according to this invention.

### Best Mode for Carrying out the Invention

An embodiment of this invention will be explained below with reference to the attached drawing.

Figure 1 is a schematic block diagram of the whole structure of an image recording and reproducing device for monitor according to this invention. A device 1 of this example is basically comprises a plurality of CCTVs 2 which are installed in different places of buildings such as a bank, a recording/reproduction controller 3 which is set in a monitor room and so on and receives images from each of the CCTVs 2, and a video monitor 4 which is driven by the controller 3 and reproduces and displays images. The video monitor 4 may be provided with a number of screens.

The recording/reproduction controller 3 has a microcomputer 31 as its main component, which is composed of CPU, ROM, RAM and so forth, each of which is driven and controlled by a control program stored in ROM. Images in each place photographed by a number of CCTVs 2 are input into a video signal switch 32 as a multiplexer in the recording/reproduction controller 3. The video signal switch 32 is switched by time division control signals S12 provided by the microcomputer 31, and cyclically inputs alternately video signals from each of the CCTVs 2.

30 frames of video images are normally input per second. Accordingly, when ten CCTVs 2 are set, for example, 3 frames/sec. of video images are received for each station. The video signals of each station received through the video signal switch 32 are digitized by being compressed in a video signal compressing and digitizing circuit 33 which has a JPEG board and so on. Digitized video signals are stored in a frame memory inside the microcomputer 31, for example, and are written in a large-capacity recording circuit 34 in sequence.

The large-capacity recording circuit 34 is provided with a phase change optical disk, for instance. The recording circuit 34 can record a large quantity of video images at high speed, because the phase change optical disk is used as a recording medium. The video signals are recorded and stored, In a condition that the time when the images were sent from the stations and the names of the stations which sent the images are in correspondence with each other. Accordingly, when the time and the name of the station are designated, a required image is easily reproduced and displayed.

The numeral 35 denotes a signal expanding and video generating circuit which expands the compressed video signals stored and converts the signals into reproducible video images, and which has a JPEG board and so on. The reproducing signals output from the circuit 35 are supplied to the video monitor 4 and displayed on the screen. As described before, the video monitor 4 may be provided with a number of screens, and can reproduce at the same time images sent by a number of stations, and can also reproduce at the same time images sent by the same station at different times.

When the recording and reproducing device 1 thus constituted in this example is used, the video images recorded by a number of stations, along with the name of the stations and the time when the images were sent, are recorded and stored in the large-capacity recording circuit 34 having the phase change optical disk. Consequently, only by designating the place and time that need to be reproduced, it is possible to automatically reproduce and display a required video image.

Incidentally, the device according to this invention can be adopted as a management system of a bank and so on, and the device may receive, record and store sound signals as well as video signals. In this case, the device can be used as it is, as a system to record and reproduce telephone calls of a bank, orders received on the phone by mail order, correspondence at a fire station, a police station, and so on. The device can also be used as a system for recording the images and the voices of teachers of a private school at an interview, for example, where a plurality of people are involved. Furthermore, the device can be used in a system for inspecting a manufacturing process.

### Industrial Applicability

As was explained above, according to the image recording and reproducing device of the invention, because an optical disk in a phase change recording system and so on, which can record at high speed and in large quantities, is used as a recording medium, and the video signals obtained are compressed and recorded, a large quantity of image information photographed by a number of monitor cameras can be recorded and stored efficiently. And since the images from a number of monitor cameras are time-divisionally driven by a multiplexer, it is possible to receive in real time and record the images from a number of monitor cameras. Required image information can be easily reproduced and displayed when the time when the images were sent and the monitor camera which sent the images are designated.

When the device according to this invention records and stores sound information in addition to the image information, the device can be used not only for a monitor system of a building and so on but also in a variety of uses.

## Claims

1. An image recording and reproducing device comprising a plurality of image pickup means; a multiplexer which controls switching input of image signals photographed by the image pickup means; a video signal compressing means which digitizes and compresses the image signals input through the multiplexer; a high-speed and large-capacity memory means which has an optical disk in the phase change recording system and so on to record compressed digital signals treated by the video signal compressing means; a signal expanding means which reproduces the image signals by expanding the compressed digital signals recorded in the large-capacity memory means; a display means which reproduces and displays the image signals obtained by the signal expanding means; and a control means having a microcomputer to control each of said means; whereby the device, under the control of the control means, receives in real time the images photographed by the plurality of image pickup means by time-divisionally driving the multiplexer, and records and stores in said large-capacity memory means each of the image signals together with information about the time when the images were photographed and information which designates the image pickup means, and which reproduces and displays the required image information through said display means by designating the time and the image pickup means.

2. An image recording and reproducing means according to claim 1, wherein said image pickup means has a means of recording sounds, whereby sound signals are recorded and stored, together with image signals.

3. A recording and reproducing means according to claim 1, comprising a means for recording sounds instead of said image pickup means.

4. A monitor camera system comprising the image recording and reproducing device according to any one of claims 1 to 3.
